# FASCICULE DE BREVET EUROPEEN

(11) **EP 0 714 921 B1**
(45) Date de publication et mention de la délivrance du brevet: **17.09.1997**
(21) Numéro de dépôt: 95402378.4
(22) Date de dépôt: 25.10.1995
(51) Int. Cl.: C08F 220/24, D06M 15/277

(54) **Copolymères fluorés cationiques pour le traitement oléophobe et hydrophobe des matériaux de construction**
Kationische fluorierte Copolymere für die öl- und wasserabweisende Behandlung von Baumaterialien
Cationic fluorinated copolymers for oil and water repellent treatment of construction materials

(30) Priorité: 29.11.1994 FR 9414281
(43) Date de publication de la demande: 05.06.1996
(73) Titulaire: ELF ATOCHEM S.A., 92800 Puteaux (FR)
(72) Inventeur: Corpart, Jean-Marc, F-95110 Sannois (FR); Bonardi, Christian, F-27300 Saint-Aubin-le-Vertueux (FR); Lina, Marie-José, F-69005 Lyon (FR); Dessaint, André, F-60600 Clermont (FR)
(74) Mandataire: Leboulenger, Jean

(56) Documents cités:
- EP-A- 0 542 598
- EP-A- 0 552 630
- US-A- 4 127 711

## Description

La présente invention concerne le traitement oléophobe et hydrophobe des matériaux de construction, tels que briques, tuiles, pierres naturelles ou reconstituées, céramiques, plâtres, bétons, ciments, mortiers, bois, verre, métaux et matières plastiques, et a plus particulièrement pour objet le traitement anti-salissure et anti-graffiti desdits matériaux.

On connaît déjà des produits ou compositions permettant d'obtenir l'une ou l'autre de ces propriétés sur les matériaux de construction. On peut d'abord citer les silicones (brevets FR 2 469 437 et 2 474 518) qui confèrent effectivement un caractère hydrophobe, mais qui ne sont pas oléofugeants.

Sont également connus (brevet FR 2 313 987) des procédés consistant à appliquer, séparément ou en mélange, un composé polymère hydrosoluble dérivé d'acide carboxylique insaturé et une solution d'un composé organo-silicique. Ces composés ne sont cependant pas d'un emploi facile et les propriétés oléofuges et hydrofuges n'apparaissent qu'après un long séchage à température ambiante ou après un séchage thermique.

On a également proposé l'emploi de copolymères hydroxylés du type acrylique-siloxane, seuls ou réticulés avec d'autres résines. Cependant, ces produits qui présentent une résistance à l'eau, n'offrent aucune résistance aux huiles.

On a aussi proposé l'emploi de polyoxostéarate d'alumine, d'alcool polyvinylique (brevet FR 2 607 821), de polymères acryliques (brevets US 4 353 745 et 4 241 141), de cires d'origine végétale ou minérale (brevets WO 80/01072 et FR 2 445 361), de polysaccharide (brevet WO 88/10156), de prépolymères d'isocyanate (brevets US 4 716 056, EP 340 237 et EP 404 895). Toutefois, ces produits n'ont aucune propriété oléfugeante.

Pour avoir une efficacité durable du traitement, les revêtements utilisés sont le plus souvent réticulés. Cette réticulation se fait in situ, sur le substrat à traiter, et fait appel à des groupements chimiques capables de réagir à température ambiante et sans activation thermique, les catalyseurs étant seuls tolérés. Dans cette perspective, la réaction des motifs isocyanates avec des groupements hydroxyles (brevets US 4 716 056, EP 340 237, BE 901 692, GB 2 187 196, EP 404 895) ou avec l'humidité présente sur le support (brevet GB 2 187 196) est souvent mise à profit. Généralement, le revêtement se décompose en deux couches qu'on applique successivement sur le substrat: la première couche contient par exemple les groupements hydroxyles et la seconde est constituée de prépolymères uréthannes à motifs isocyanates libres. Le traitement peut également être réalisé en une couche en mélangeant avant l'application le composé comportant les groupements -OH et le prépolymère à motifs isocyanates ; dans ce cas cependant, la durée de vie en pot du mélange est faible. Par ailleurs, la réactivité des isocyanates oblige à mettre les composés en solution dans des solvants organiques ne comportant pas de groupements -OH (cétones, esters, white spirit,...). Ce type de revêtements n'a, en général, aucune propriété oléfugeante.

Pour conférer aux matériaux de construction des propriétés hydrofuge, oléofuge, anti-graffiti et anti-affiche, stables au vieillissement et aux intempéries, on a proposé dans le brevet FR 2 540 131 d'employer une composition comprenant en poids :
- de 0,1 à 25 % d'un copolymère fluoré à groupements OH,
- de 2 à 25 % d'un polyisocyanate ou prépolymère d'isocyanate, aliphatique ou aromatique,
- de 0,1 à 10 % d'un catalyseur, et
- un ou plusieurs solvants organiques de dilution pour complément à 100 %. Cette composition confère effectivement des propriétés oléofuges et hydrofuges aux matériaux traités. Par contre, elle nécessite toujours l'emploi d'une dilution en milieu solvant.

Il a maintenant été trouvé qu'on peut résoudre ce problème à l'aide de copolymères fluorés contenant non seulement des groupements OH, mais aussi des groupements amino sous forme salifiée ou quaternisée. Avec ces nouveaux copolymères fluorés cationiques, on peut préparer des compositions aqueuses qui, appliquées sur pierre, béton et plus généralement sur tous matériaux de construction, ne changent pas l'aspect de surface des matériaux et leur confèrent, après un temps de séchage très court, à la fois des propriétés hydrofuge, oléofuge, anti-graffiti stables au vieillissement et aux intempéries.

La présente invention a donc pour premier objet des copolymères fluorés contenant des groupements amino sous forme salifiée ou quaternisée, caractérisés en ce qu'ils sont constitués de (% en poids) :
***(a)*** 50 à 92 %, de préférence 70 à 90 %, d'un ou plusieurs monomères polyfluorés de formule générale : 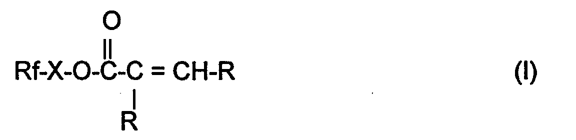 dans laquelle Rf représente un radical perfluoroalkyle à chaîne droite ou ramifiée contenant 2 à 20 atomes de carbone, de préférence 4 à 16 atomes de carbone, X représente un enchaînement bivalent lié à O par un atome de carbone et pouvant comporter un ou plusieurs atomes d'oxygène, de soufre et/ou d'azote, l'un des symboles R représente un atome d'hydrogène et l'autre un atome d'hydrogène ou un radical alkyle contenant 1 à 4 atomes de carbone ;
***(b)*** 1 à 25 %, de préférence 2 à 18 %, d'un ou plusieurs monomères de formule générale : 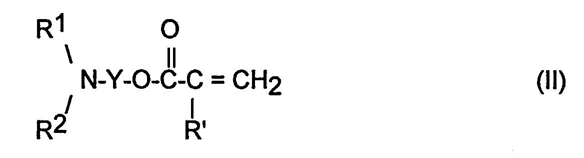 dans laquelle Y représente un radical alkylène, linéaire ou ramifié, contenant 1 à 4 atomes de carbone, R' représente un atome d'hydrogène ou un radical alkyle contenant 1 à 4 atomes de carbone, R¹ et R², identiques ou différents, représentent chacun un atome d'hydrogène, un radical alkyle linéaire ou ramifié contenant 1 à 18 atomes de carbone ou un radical hydroxyéthyle ou benzyle, ou R¹ et R² ensemble avec l'atome d'azote auquel ils sont liés forment un radical morpholino, pipéridino ou pyrrolidinyle ;
***(c)*** 1 à 25 %, de préférence 2 à 15 %, d'un ou plusieurs monomères de formule générale : 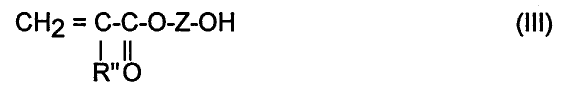 dans laquelle R" représente un atome d'hydrogène ou un radical alkyle contenant 1 à 4 atomes de carbone et Z représente un radical alkylène 2 à 4 atomes de carbone ; et
***(d)*** 0 à 30 % d'un ou plusieurs monomères quelconques autres que les monomères de formules I, II et III.

Les monomères fluorés de formule (I) peuvent être préparés selon des procédés connus, par exemple par estérification des alcools polyfluorés correspondants de formule :

Rf-X-OH (IV)

au moyen d'un acide alcènecarboxylique de formule : 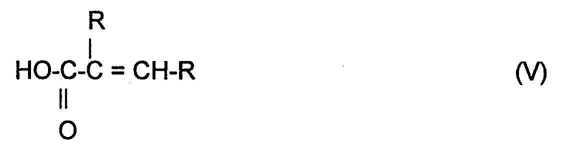 tel que, par exemple, l'acide acrylique, l'acide méthacrylique ou l'acide crotonique, en présence d'un catalyseur comme l'acide sulfurique ou l'acide p-toluènesulfonique. Au lieu des acides de formule (V), on peut également utiliser leurs esters, anhydrides ou halogénures. Comme exemples d'alcools polyfluorés de formule (IV), on peut citer plus particulièrement ceux de formules (IV-1) à (IV-10) ci-dessous :

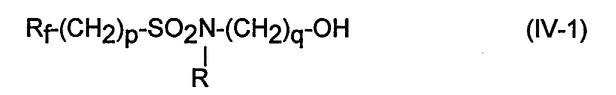

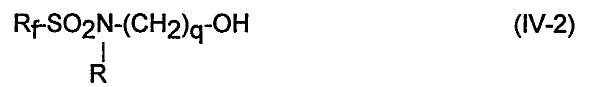

R_{f}-(CH₂)ₚ-OH (IV-3)

R_{f}-(CH₂)ₚ-O-(CH₂)_{q}-OH (IV-4)

R_{f}-(CH₂)ₚ-S-(CH₂)_{q}-OH (IV-5)

R_{f}-(CH₂)ₚ-(OCH₂CH₂)_{q}-OH (IV-6)

R_{f}-(CH₂)ₚ-SO₂-(CH₂)_{q}-OH (IV-7)

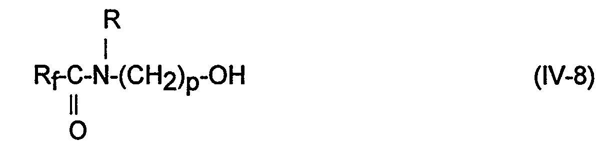

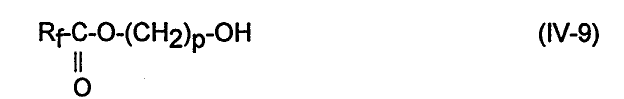

R_{f}-CH = CH-(CH₂)ₚ-OH (IV-10)

dans lesquelles R_{f} et R ont les mêmes significations que ci-dessus, les symboles p et q, identiques ou différents, représentent chacun un nombre entier allant de 1 à 20 et, de préférence, égal à 2 ou 4.

Pour des raisons économiques et pratiques, il est particulièrement intéressant d'utiliser un mélange de composés présentant des radicaux R_{f} différents.

Comme exemples de monomères de formule (II), on peut citer plus particulièrement les acrylates et méthacrylates des amino-alcools suivants : diméthylamino-2-éthanol, diéthylamino-2-éthanol, dipropylamino-2-éthanol, di-isobutylamino-2-éthanol, N-tertiobutylamino-2-éthanol, N-tert-butyl-N-méthylamino-2-éthanol, morpholino-2-éthanol, N-méthyl-N-dodécylamino-2-éthanol, N-éthyl-N-octadécylamino-2-éthanol, N-éthyl-N-(éthyl-2-hexyl)amino-2-éthanol, pipéridino-2-éthanol, (pyrrolidinyl-1)-2-éthanol, diéthylamino-3-propanol-1, diéthylamino-2-propanol-1, diméthylamino-1-propanol-2, diéthylamino-4-butanol-1, di-isobutylamino-4-butanol-1, diméthylamino-1-butanol-2, diéthylamino-4-butanol-2. Ces esters peuvent être préparés par exemple suivant la méthode décrite dans le brevet US 2 138 763. Le monomère de formule (II) préféré est le méthacrylate de diméthylaminoéthyle ou le méthacrylate de N-tertiobutylaminoéthyle.

Comme exemples de monomères de formule (III), on peut citer plus particulièrement les acrylates et méthacrylates d'alkylène glycols tels que l'éthylène glycol et le propylène glycol. Le monomère de formule (III) préféré est le méthacrylate d'hydroxy-2 éthyle.

Comme exemples de comonomères (d) pouvant être utilisés dans le cadre de la présente invention, on peut citer :
- les hydrocarbures oléfiniques inférieurs, halogénés ou non, tels que l'éthylène, le propylène, l'isobutène, le chloro-3-isobutène-1, le butadiène, l'isoprène, les chloro- et dichloro-butadiènes, les fluoro- et di-fluoro-butadiènes, le diméthyl-2,5-hexadiéne-1,5, le diisobutylène ;
- les halogénures de vinyle, d'allyle ou de vinylidène tels que le chlorure de vinyle ou de vinylidène, le fluorure de vinyle ou de vinylidène, le bromure d'allyle, le chlorure de méthallyle ;
- le styrène et ses dérivés, tels que le vinyl-toluène, l'α-méthyl-styrène, l'α-cyanométhyl-styrène, le divinylbenzène, le N-vinylcarbazole ;
- les alkylvinylcétones comme la méthylvinylcétone ;
- les acides insaturés, tels que les acides acrylique, méthacrylique, α-chloroacrylique, crotonique, maléique, fumarique, itaconique, citraconique et sénécioïque, leurs anhydrides et leurs esters comme les acrylates et méthacrylates d'allyle, de méthyle, de butyle, d'isobutyle, d'hexyle, d'heptyle, d'éthyle-2-hexyle, de cyclohexyle, de lauryle, de stéaryle ou de cellosolve, le maléate de diméthyle, le crotonate d'éthyle, le maléate acide de méthyle, l'itaconate acide de butyle, les diacrylates et diméthacrylates de glycol ou de polyalkylèneglycol;
- les esters insaturés de formule : 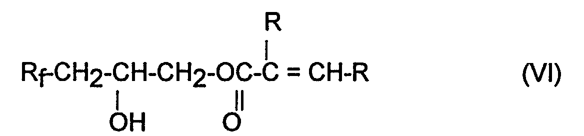 obtenus par condensation d'un époxyde fluoré : 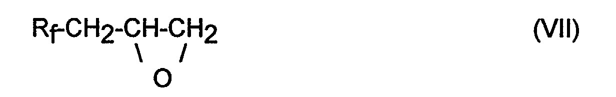 sur un acide alcène monocarboxylique de formule (V) ;
- les chlorures de formule : 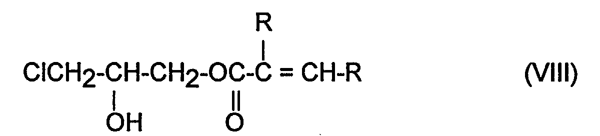 obtenus par addition de l'épichlorhydrine sur un acide de formule (V);
- les acrylates et méthacrylates d'éthers de mono- et poly-éthylèneglycols ou -propylèneglycols de formule : 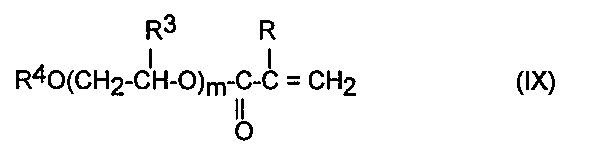 dans laquelle R³ représente un atome d'hydrogène ou un radical méthyle, R⁴ représente un radical alkyle et m est un nombre entier compris entre 1 et 50 ;
- les acrylates et méthacrylates de polyéthylène-glycol ou de polypropylèneglycol de formule : 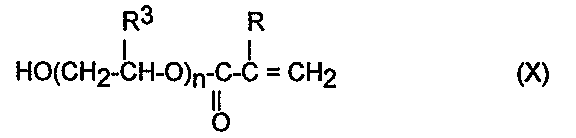 dans laquelle R et R³ ont les mêmes significations que précédemment et n est un nombre entier compris entre 2 et 50 ;
- l'acrylonitrile, le méthacrylonitrile, le chloro-2-acrylonitrile, l'acrylate de cyano-2-éthyle, le méthylène glutaronitrile, le cyanure de vinylidène, les cyanoacrylates d'alkyle comme le cyanoacrylate d'isopropyle, la trisacryloyl-hexahydro-s-triazine, le vinyltrichlorosilane, le vinyltriméthoxysilane, le vinyltriéthoxysilane ;
- l'alcool allylique, l'allylglycolate, l'isobutène diol, l'allyloxy-éthanol, l'o-allylphénol, le divinylcarbinol, le glycérol-allyléther, l'acrylamide, le méthacrylamide, les maléamide et maléimide, le N-(cyano-éthyl)-acrylamide, le N-isopropyl-acrylamide, le diacétone-acrylamide, les N-(hydroxyméthyl)-acrylamide et méthacrylamide, les N-(alcoxyméthyl)-acrylamides et méthacrylamides, le glyoxal-bis-acrylamide, l'acrylate ou méthacrylate de sodium, l'acrylate de sulfo-2-éthyle, les acides vinyl-sulfonique et styrène-p-sulfonique et leurs sels alcalins, l'amino-3-crotonitrile, la mono-allylamine, les vinylpyridines, l'acrylate ou méthacrylate de glycidyle, l'allylglycidyléther, l'acroléine ;
- les esters d'allyle comme l'acétate d'allyle et l'heptanoate d'allyle ;
- les esters vinyliques tels que l'acétate de vinyle, le propionate de vinyle, les esters vinyliques des acides connus sur le marché sous le nom de "Versatic acids", l'isobutyrate de vinyle, le sénécioate de vinyle, l'isodécanoate de vinyle, le stéarate de vinyle ; et
- les éthers alkyl-vinyliques, halogénés ou non, tels que le cétylvinyléther, le dodécylvinyléther, l'isobutylvinyléther, l'éthylvinyléther, le chloro-2-éthylvinyléther.

Les copolymères fluorés cationiques selon l'invention sont préparés par copolymérisation des monomères en solution dans un solvant organique ou dans un mélange de solvants organiques tels que l'acétone, le tétrahydrofurane, le dioxanne, le diméthylformamide, la N-méthyl-pyrrolidone-2, le diméthylsulfoxyde, l'acétate d'éthyle, d'isopropyle ou de butyle, la méthyl éthyl cétone, la méthyl isobutyl cétone, l'éthanol et l'isopropanol. Comme solvant de polymérisation on préfère utiliser la N-méthyl-pyrrolidone-2 (NMP), l'acétone ou un mélange binaire NMP/acétone. La concentration totale des monomères peut varier de 5 à 60 % en poids.

On effectue la polymérisation en présence d'initiateur(s) qu'on utilise à raison de 0,1 à 1,5 % par rapport au poids total des monomères engagés. Comme initiateurs, on peut utiliser des peroxydes tels que, par exemple, le peroxyde de benzoyle, le peroxyde de lauroyle, le peroxyde de succinyle et le perpivalate de tertiobutyle, ou des composés azoïques tels que l'azo-2,2'-bis-isobutyronitrile, l'azo-4,4'-bis-(cyano-4-pentanoïque) et l'azodicarbonamide. On peut également opérer en présence de rayonnements UV et de photo-initiateurs tels que la benzophénone, la méthyl-2-anthraquinone ou le chloro-2-thioxanthone. La longueur des chaînes polymériques peut, si on le désire, être réglée à l'aide d'agents de transfert de chaînes tels que les alkylmercaptans, le tétrachlorure de carbone ou le triphénylméthane, utilisés à raison de 0,05 à 1 % par rapport au poids total de monomères.

La température de réaction peut varier dans de larges limites, c'est-à-dire entre la température ambiante et le point d'ébullition du mélange de réaction. Préférentiellement, on opère entre 60 et 90°C.

La salification du copolymère peut se faire à l'aide d'acides minéraux ou organiques forts ou moyennement forts, c'est-à-dire d'acides dont la constante de dissociation ou la première constante de dissociation est supérieure à 10⁻⁵. On peut citer, par exemple, les acides chlorhydrique, bromhydrique, sulfurique, nitrique, phosphorique, acétique, formique, propionique ou lactique. Préférentiellement, on utilise l'acide acétique.

Au lieu de convertir le copolymère en sel, on peut le quaterniser à l'aide d'un agent quaternisant approprié tel que l'iodure de méthyle, l'iodure d'éthyle, le sulfate de diméthyle, le sulfate de diéthyle, le chlorure de benzyle, le phosphate de triméthyle, le p-toluènesulfonate de méthyle.

La solution du copolymère fluoré cationique obtenue est diluée avec de l'eau. Le ou les solvant(s) de synthèse les plus légers, notamment l'acétone, peuvent éventuellement être enlevés par distillation sous vide à une température comprise entre 40 et 90°C. Cette opération permet d'obtenir une solution aqueuse du copolymère fluoré avec un point éclair supérieur à 100°C ; la solution aqueuse reste stable après évaporation du solvant. Dans le cas de l'utilisation d'un solvant de polymérisation comportant une fonction susceptible de réagir avec les motifs isocyanates, comme l'éthanol ou l'isopropanol, la distillation est nécessaire pour éviter des réactions parasites lors de la mise en oeuvre de la composition selon l'invention. Les masses moléculaires moyennes pondérales des copolymères fluorés selon l'invention sont comprises entre 2000 et 50000 g/mole. La détermination de ces masses moléculaires peut être réalisée par perméation sur gel. Les copolymères selon l'invention possèdent des propriétés émulsifiantes et une solution de copolymère diluée à 10 % en poids avec de l'eau a une tension de surface γ_{L} de l'ordre de 35 à 50 mN/m.

La présente invention a également pour objet des compositions comprenant en poids :
**(A)** de 0,1 à 25 %, de préférence 1 à 10 %, d'au moins un copolymère fluoré cationique tel que décrit précédemment ;
**(B)** de 0,1 à 25 %, de préférence 0,1 à 10 %, d'au moins un polyisocyanate aliphatique, araliphatique ou aromatique ;
**(C)** de 0 à 35 %, de préférence 0 à 15 % d'un ou plusieurs solvants miscibles à l'eau ; et
**(D)** de l'eau de dilution pour complément à 100 %, les proportions des composants étant choisies de façon à ce que le rapport molaire NCO/OH soit au moins égal à 1,2 et que le taux de matières non volatiles dans ces compositions ne dépasse pas 50 % et soit de préférence inférieur à 20 %.

Le composant (B) des compositions selon l'invention est un polyisocyanate contenant de préférence 5 à 25 % en poids de motifs NCO libres, qui peut être mis en émulsion dans l'eau ou dans une solution du copolymère fluoré (A) diluée avec de l'eau.

Les polyisocyanates de type (B) sont décrits par exemple dans les brevets EP 206 059, EP 554 747 et US 4 663 337. Ils sont préparés à partir de molécules aliphatiques linéaires, aliphatiques cycliques, araliphatiques et/ou aromatiques contenant des groupements NCO. Les polyisocyanates de structure biuret, isocyanurate et uret-dione principalement à base de diisocyanates d'hexaméthylène sont particulièrement recommandés. On peut citer à titre d'exemple le N,N',N"-tris-(6-isocyanatohexyl) biuret et le N,N',N"-tris-(6-isocyanatohexyl)isocyanurate. Pour faciliter leur dispersion dans l'eau, les polyisocyanates (B) sont généralement rendus hydrophiles en faisant réagir une partie des groupements isocyanates avec des molécules comportant un groupement réactif (alcool par exemple) et un groupement hydrophile cationique (par exemple une amine tertiaire salifiée avec un acide ou quaternisée), anionique (par exemple un groupement carboxylique salifié par une base) ou non ionique (par exemple des unités éthylène oxyde comportant de 5 à 100 motifs).

Les polyisocyanates (B) peuvent également être utilisés sous leur forme hydrophobe sans modification destinée à les rendre hydrophiles, les propriétés émulsifiantes des copolymères (A) permettant de les disperser dans l'eau. Dans ce cas, la composition selon l'invention est préparée en émulsifiant le composé (B) dans une solution de (A) diluée avec de l'eau.

Si le polyisocyanate (B) utilisé est hydrophile, la composition selon l'invention peut être préparée soit en dispersant le composé (B) dans l'eau sous agitation et en ajoutant ensuite le copolymère (A) en solution diluée avec de l'eau, soit en dispersant directement le polyisocyanate (B) dans une solution diluée de (A).

L'homogénéisation des deux composants ne nécessite pas la mise en oeuvre de moyens techniques compliqués. Pour une homogénéisation optimale, il est toutefois préférable d'utiliser au moins un agitateur à ailettes monté sur une perceuse. Suivant l'intensité de l'agitation, la taille des particules de la dispersion est comprise entre 100 et 500 nm. En raison des propriétés de surface du composé (A), les molécules du copolymère se fixent par adsorption aux gouttelettes de polyisocyanate, de la même façon que des molécules d'émulsifiant.

Les groupements NCO libres du polyisocyanate peuvent réagir avec les fonctions OH du copolymère (A) et avec l'eau. Ces réactions peuvent conduire à une nette augmentation de la viscosité de la composition. Le délai de mise en oeuvre de la préparation est directement dépendant de cette viscosification.

De manière surprenante, l'utilisation du système revendiqué comportant un copolymère (A) cationique permet une durée de vie en pot importante, généralement largement supérieure à 24 heures.

Le délai de mise en oeuvre est donc largement accru par rapport à des systèmes anioniques.

Comme une partie des groupements NCO du polyisocyanate (B) réagit avec l'eau, on opère généralement avec un excès de groupements NCO par rapport aux fonctions alcool portées par le copolymère (A). Le rapport NCO/OH doit être au moins égal à 1,2 et est de préférence au moins égal à 1,5.

L'application des compositions selon l'invention peut se faire en une ou plusieurs couches suivant les techniques bien connues en soi, par exemple, par pulvérisation, immersion, étendage à la brosse ou au rouleau, de façon à déposer 80 à 800 g de composition selon l'invention par m² de surface à traiter.

Le revêtement obtenu est classiquement séché à température ambiante. Il peut également être séché à température plus élevée, dans un four ou une étuve.

Après l'application du mélange réactif sur le substrat, l'eau et les solvants qui constituent le milieu de dispersion s'évaporent et permettent l'agglomération des gouttelettes de polyisocyanate (B) et la diffusion simultanée des molécules du copolymère fluoré (A) dans les gouttelettes.

Les groupements NCO et OH réagissent : le film obtenu avec la composition revendiquée est réticulé.

Suivant une autre modalité de la présente invention, il est également possible d'effectuer l'application en déposant d'abord sur le support à traiter une solution du composant (A) puis une dispersion aqueuse du composant (B) ou inversement.

Bien que les copolymères fluorés cationiques selon l'invention aient été conçus plus particulièrement pour le traitement anti-salissure et anti-graffiti des matériaux de construction, ils peuvent aussi être utilisés, seuls ou associés à un polyisocyanate, pour le traitement oléophobe et hydrophobe d'autres substrats tels que papier, textiles, non-tissés, cuirs et moquettes.

Pour évaluer les performances des substrats traités selon l'invention, on a utilisé les tests suivants :

### TESTS D'OLEOPHOBIE

L'oléophobie a été mesurée suivant la méthode décrite dans "AATCC Technical Manual", Test Method 118, qui évalue la non mouillabilité du substrat par une série de liquides huileux dont les tensions superficielles sont de plus en plus faibles.

Un autre test consiste à mesurer le temps de pénétration d'une goutte de dodécane (huile n°5 du test AATCC 118) déposée sur le support.

### TESTS D'HYDROPHOBIE

Pour tester l'hydrophobie des supports, on a mesuré le temps de pénétration d'une goutte d'eau dans le matériau.

On mesure également la reprise en eau d'une surface de 43 cm² du support soumis à une hauteur d'eau de 11 cm pendant une heure.

### TEST ANTI-GRAFFITI

Sur une plaque du support à tester, on écrit avec un feutre indélébile noir de référence NSO Pentel Pen Permanent MARKER. On laisse sécher pendant 24 heures puis on procède au nettoyage de la plaque en étalant sur sa surface de la méthyl-éthyl-cétone. On arrête le nettoyage quand le solvant n'extrait plus d'encre et on cote de 0 à 5 l'aspect de surface du matériau de la façon suivante :
***5.*** Après nettoyage à la méthyl-éthyl-cétone, la plaque a retrouvé son aspect d'origine : aucune trace de feutre ne subsiste.
***4.*** La disparition de l'encre est quasi-totale après nettoyage à la méthyléthylcétone : seule une légère trace subsiste.
***3.*** Après nettoyage à la méthyl-éthyl-cétone, il y a atténuation partielle et hétérogène du graffiti : l'écriture est enlevée à plus de 50 %.
***2.*** Après nettoyage à la méthyl-éthyl-cétone, il y a atténuation partielle et hétérogène du graffiti : l'écriture est enlevée à moins de 50 %.
***1.*** Après nettoyage à la méthyl-éthyl-cétone, il n'y a qu'une très légère atténuation du graffiti.
***0.*** Le nettoyage n'a aucun effet.

Les exemples suivants, dans lesquels les parties et pourcentages sont exprimés en poids, sauf mention contraire, illustrent l'invention sans la limiter.

### EXEMPLE 1

Dans un réacteur de 500 parties en volume, équipé d'un agitateur, d'un thermomètre, d'un réfrigérant à reflux, d'une ampoule de coulée, d'une arrivée d'azote et d'un dispositif de chauffage, on a chargé 122 parties de N-méthylpyrrolidone-2, 27 parties d'acétone, 10 parties de méthacrylate de diméthylaminoéthyle, 5 parties de méthacrylate d'hydroxy-2-éthyle, 0,8 partie d'acide 4,4'-azobis(cyano-4-pentanoïque), 81,4 parties d'un mélange d'acrylates d'alcool fluoré de formule : 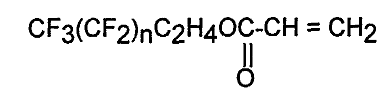 où n est égal à 5, 7, 9, 11, 13 dans des rapports en poids moyens et respectifs de 1/63/25/9/3.

On a chauffé à 85°C sous atmosphère d'azote pendant 6 heures, puis on a ajouté 5 parties d'acide acétique dans 145 parties d'eau. On a maintenu encore une heure à 75°C, puis laissé refroidir jusqu'à température ambiante. On a obtenu ainsi 396 parties d'une solution d'un copolymère fluoré selon l'invention qui contient 24,3 % de matières sèches et 13 % de fluor (ci-après solution S)

A l'aide de cette solution et d'un polyisocyanate aliphatique à base d'un trimère d'hexaméthylène diisocyanate rendu hydrophile par réaction avec un alcool polyéthoxylé de manière à avoir une teneur en NCO de 17,3% et une viscosité à 23°C de 3500 mPas (ci-après polyisocyanate P), on a préparé une composition (C₁) selon l'invention en dispersant 0,3 partie de polyisocyanate (P) dans 91,4 parties d'eau sous agitation (barreau magnétique : 200 t/min.), puis en ajoutant 8,3 parties de solution (S).

Le rapport NCO/OH de la composition (C₁) est de 1,5 et son temps de vie en pot est supérieur à 48 heures.

On a appliqué cette composition, à raison de 90 g/m², sur des pavés de terre cuite.

A titre de comparaison, on a appliqué de la même façon, sur des supports similaires, les compositions suivantes :

### Composition Cₐ

- solution (S) 8,6 parties
- eau 91,4 parties

### Composition C_{b}

- polyisocyanate (P) 8,6 parties
- eau 91,4 parties

Le tableau suivant rassemble les résultats obtenus en soumettant aux tests décrits précédemment les pavés traités avec les compositions C₁, Cₐ et C_{b} et un pavé non traité.

| **Composition** | **Reprise en eau (g/m**^{**2**}**)** | **AATCC 118** | **Temps de pénétration du dodécane** |
|---|---|---|---|
| C₁ | 81 | 8 | >24 heures |
| Cₐ | 251 | 8 | >24 heures |
| C_{b} | 12100 | 0 | 10 minutes |
| Pavé non traité | 12121 | 0 | 0 |

L'examen des résultats montre que les pavés traités avec les compositions C₁ et Cₐ comportant la solution (S) sont les seuls à présenter de réelles propriétés d'hydrophobie et d'oléophobie.

La composition C₁ selon l'invention permet d'améliorer fortement l'hydrophobie du support puisque la reprise en eau est divisée par un facteur 3 par rapport à la composition Cₐ.

### EXEMPLE 2

A l'aide de la solution (S) et du polyisocyanate (P), on a préparé deux compositions selon l'invention comprenant :

| | ***Composition C***_{***2***} | ***Composition C***_{***3***} |
|---|---|---|
| -solution (S) | 7,9 parties | 6,4 parties |
| -polyisocyanate | 0,7 parties | 2,2 parties |
| -eau | 91,4 parties | 91,4 parties |

Les compositions C₂ et C₃ se différencient de la composition C₁ par le rapport NCO/OH :
- pour la composition C₂ : NCO/OH = 3,6
- pour la composition C₃ : NCO/OH = 14,2

Le temps de vie en pot des compositions C₂ et C₃ n'est pas modifié par rapport à la composition C₁.

On a appliqué ces compositions, à raison de 90 g/m², sur des pavés de terre cuite.

| **Composition** | **Reprise en eau (g/m**^{**2**}**)** | **AATCC 118** | **Temps de pénétration du dodécane** |
|---|---|---|---|
| C₁ | 81 | 8 | >24 heures |
| C₂ | 70 | 8 | >24 heures |
| C₃ | 70 | 8 | >24 heures |

L'examen des résultats montre que le rapport NCO/OH peut varier sur une très large échelle sans modifier notablement les performances des pavés traités.

### EXEMPLE 3

En utilisant 9,65 parties de solution (S), 0,35 partie de polyisocyanate (P) et 90 parties d'eau, on a préparé une composition C₄ ayant un rapport NCO/OH de 1,5 et un temps de vie en pot supérieur à 48 heures.

On a appliqué cette composition, à raison de 300 g/m², sur des plaques en béton de façade.

A titre de comparaison, on a appliqué de la même façon, sur des supports similaires, les compositions suivantes :

### Composition C_{c}

- solution (S) 10 parties
- eau 90 parties

### Composition C_{d}

- polyisocyanate (P) 10 parties
- eau 90 parties

Le tableau suivant rassemble les résultats obtenus en soumettant au test anti-graffiti décrit précédemment les plaques traitées avec les compositions C₄, C_{c} et C_{d} et une plaque non traitée. Pour tester la persistance du revêtement, des séquences graffiti-nettoyage successives ont été réalisées. L'aspect de surface du matériau est côté après chaque nettoyage.

| **COTATION DE L' ASPECT DE SURFACE APRES UNE OU PLUSIEURS SEQUENCES GRAFFITI-NETTOYAGE** | | | | | | | |
|---|---|---|---|---|---|---|---|
| **Composition** | **aspect initial** | **1**^{**er**}**graffiti** | **2**^{**ème**}**graffiti** | **3**^{**ème**}**graffiti** | **4**^{**ème**}**graffiti** | **5**^{**ème**}**graffiti** | **9**^{**ème**}**graffiti** |
| C₄ | 5 | 5 | 4 | 4 | 4 | 3 | 3 |
| C_{c} | 5 | 4 | 3 | 2 | 2 | 1 | 1 |
| C_{d} | 5 | 1 | 1 | 1 | 1 | 1 | 1 |

L'examen des résultats montre que seule la composition C₄ selon l'invention apporte au support de réelles propriétés anti-graffiti.

En outre, la permanence du traitement est bonne puisqu'il faut au moins 5 cycles graffiti-nettoyage pour dégrader sensiblement l'aspect du support traité.

## Revendications

1. Copolymère fluoré contenant des groupements amino sous forme salifiée ou quaternisée, caractérisé en ce qu'il est constitué de (% en poids) :
***(a)*** 50 à 92 % d'un ou plusieurs monomères polyfluorés de formule générale : 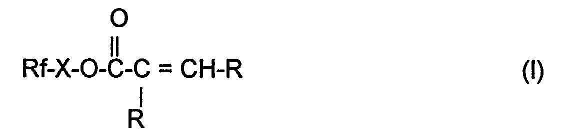 dans laquelle Rf représente un radical perfluoroalkyle à chaîne droite ou ramifiée contenant 2 à 20 atomes de carbone, X représente un enchaînement bivalent lié à O par un atome de carbone et pouvant comporter un ou plusieurs atomes d'oxygène, de soufre et/ou d'azote, l'un des symboles R représente un atome d'hydrogène et l'autre un atome d'hydrogène ou un radical alkyle contenant 1 à 4 atomes de carbone ;
***(b)*** 1 à 25 % d'un ou plusieurs monomères de formule générale : 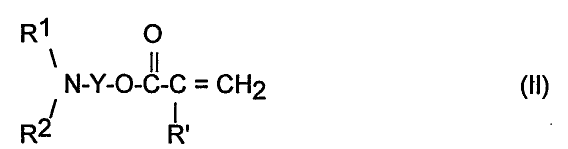 dans laquelle Y représente un radical alkylène, linéaire ou ramifié, contenant 1 à 4 atomes de carbone, R' représente un atome d'hydrogène ou un radical alkyle contenant 1 à 4 atomes de carbone, R¹ et R², identiques ou différents, représentent chacun un atome d'hydrogène, un radical alkyle linéaire ou ramifié contenant 1 à 18 atomes de carbone ou un radical hydroxyéthyle ou benzyle, ou R¹ et R² ensemble avec l'atome d'azote auquel ils sont liés forment un radical morpholino, pipéridino ou pyrrolidinyle ;
***(c)*** à 25 % d'un ou plusieurs monomères de formule générale : 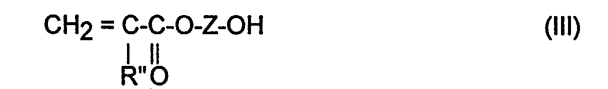 dans laquelle R" représente un atome d'hydrogène ou un radical alkyle contenant 1 à 4 atomes de carbone et Z représente un radical alkylène contenant 2 à 4 atomes de carbone ; et
***(d)*** 0 à 30 % d'un ou plusieurs monomères quelconques autres que les monomères de formules I, II et III.

2. Copolymère fluoré selon la revendication 1, caractérisé en ce qu'il comprend 70 à 90 % de monomère(s) polyfluoré(s) de formule (I), 2 à 18 % de monomère(s) de formule (II) et 2 à 15 % de monomère(s) de formule (III).

3. Copolymère fluoré selon la revendication 1 ou 2, caractérisé en ce que le monomère polyfluoré est un acrylate d'alcool polyfluoré de formule : 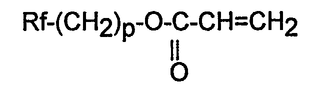 dans laquelle Rf a la même signification que dans la revendication 1 et p est égal à 2 ou 4.

4. Copolymère fluoré selon l'une des revendications 1 à 3, caractérisé en ce que le monomère de formule (II) est le méthacrylate de diméthylaminoéthyle ou de N-tertiobutylaminoéthyle.

5. Copolymère fluoré selon l'une des revendications 1 à 4, caractérisé en ce que le monomère de formule (III) est un acrylate ou méthacrylate d'alkylèneglycol, de préférence le méthacrylate d'hydroxy-2 éthyle.

6. Composition pour le traitement oléophobe et hydrophobe des matériaux de construction ou d'autres substrats, caractérisée en ce qu'elle comprend en poids :
**(A)** de 0,1 à 25 % d'au moins un copolymère fluoré salifié ou quaternisé, selon l'une des revendications 1 à 5 ;
**(B)** de 0,1 à 25 % d'au moins un polyisocyanate aliphatique, araliphatique ou aromatique ;
**(C)** de 0 à 35 % d'un ou plusieurs solvants miscibles à l'eau ; et
**(D)** de l'eau de dilution pour complément à 100 %, les proportions des composants étant choisies de façon à ce que le rapport molaire NCO/OH soit au moins égal à 1,2 et que le taux de matières non volatiles dans ces compositions ne dépasse pas 50 %.

7. Composition selon la revendication 6, caractérisé en ce qu'elle comprend 1 à 10 % de copolymère fluoré, 0,1 à 10 % de polyisocyanate, et 0 à 15 % de solvant miscible à l'eau.

8. Composition selon la revendication 6 ou 7, caractérisée en ce que le copolymère fluoré (A) comprend 70 à 90 % de monomère(s) polyfluoré(s) de formule (1), 2 à 18 % de monomère(s) de formule (II) et 2 à 15 % de monomère(s) de formule (III).

9. Composition selon l'une des revendications 6 à 8, caractérisée en ce que son taux de matières non volatiles est inférieur à 20 % et le rapport molaire NCO/OH est au moins égal à 1,5.

10. Composition selon l'une des revendications 6 à 9, caractérisée en ce que le monomère polyfluoré est un acrylate d'alcool polyfluoré de formule : 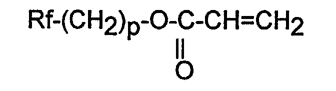 dans laquelle Rf a la même signification que dans la revendication 1 et p est égal à 2 ou 4.

11. Composition selon l'une des revendications 6 à 10, caractérisée en ce que le monomère de formule (Il) est le méthacrylate de diméthylaminoéthyle ou de N-tertiobutylaminoéthyle.

12. Composition selon l'une des revendications 6 à 11, caractérisée en ce que le monomère de formule (III) est un acrylate ou méthacrylate d'alkylèneglycol, de préférence le méthacrylate d'hydroxy-2 éthyle.

13. Composition selon l'une des revendications 6 à 12, caractérisée en ce que le polyisocyanate (B) contient 5 à 25 % en poids de motifs NCO libres.

14. Composition selon l'une des revendications 6 à 13, caractérisée en ce que le solvant (C) est la N-méthylpyrrolidone-2, l'acétone ou un mélange de ces composés.

15. Procédé pour le traitement oléophobe et hydrophobe des matériaux de construction ou d'autres substrats, caractérisé en ce qu'on applique sur leur surface une composition selon l'une des revendications 6 à 14.

16. Procédé selon la revendication 15, caractérisé en ce qu'on applique 80 g à 800 g de composition par m² de surface à traiter.

17. Procédé pour le traitement oléophobe et hydrophobe des matériaux de construction, caractérisé en ce que l'on dépose d'abord sur le matériau à traiter une solution du copolymère fluoré (A), puis une dispersion aqueuse du polyisocyanate (B) ou inversement.

## Claims

1. Fluoro copolymer in salified or quaternized form, containing amino groups, characterized in that it is made up of (% by weight):
(a) 50 to 92 % of one or more polyfluoro monomers of general formula: 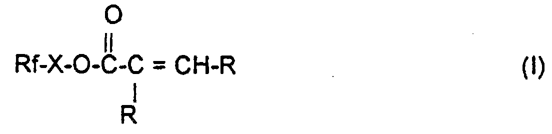 in which Rf represents a perfluoroalkyl radical with a straight or branched chain containing 2 to 20 carbon atoms, X represents a divalent grouping linked to O by a carbon atom and possibly containing one or more oxygen, sulphur and/or nitrogen atoms, one of the symbols R represents a hydrogen atom and the other represents a hydrogen atom or an alkyl radical containing 1 to 4 carbon atoms;
(b) 1 to 25 % of one or more monomers of general formula: 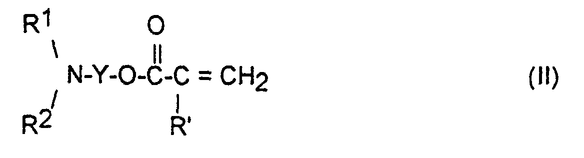 in which Y represents a linear or branched alkylene radical containing 1 to 4 carbon atoms, R' represents a hydrogen atom or an alkyl radical containing 1 to 4 carbon atoms, R¹ and R², which may be identical or different, each represent a hydrogen atom, a linear or branched alkyl radical containing 1 to 18 carbon atoms or a hydroxyethyl or benzyl radical, or R¹ and R², together with the nitrogen atom to which they are attached, form a morpholino, piperidino or pyrrolidinyl radical;
(c) 1 to 25 % of one or more monomers of general formula: 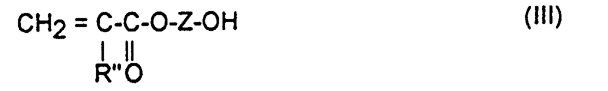 in which R" represents a hydrogen atom or an alkyl radical containing 1 to 4 carbon atoms and Z represents an alkylene radical containing 2 to 4 carbon atoms; and
(d) 0 to 30 % of one or more of any monomers other than the monomers of formulae I, II and III.

2. Fluoro copolymer according to Claim 1, characterized in that it comprises 70 to 90 % of polyfluoro monomer(s) of formula (I), 2 to 18 % of monomer(s) of formula (II) and 2 to 15 % of monomer(s) of formula (III).

3. Fluoro copolymer according to Claim 1 or 2, characterized in that the polyfluoro monomer is a polyfluoroalkyl acrylate of formula: 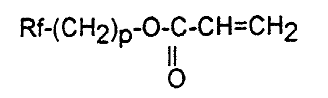 in which Rf has the same meaning as in Claim 1 and p is equal to 2 or 4.

4. Fluoro copolymer according to one of Claims 1 to 3, characterized in that the monomer of formula (II) is dimethylaminoethyl methacrylate or N-tert-butylaminoethyl methacrylate.

5. Fluoro copolymer according to one of Claims 1 to 4, characterized in that the monomer of formula (III) is an alkylene glycol acrylate or methacrylate, preferably 2-hydroxyethyl methacrylate.

6. Composition for the oleophobic and hydrophobic treatment of building materials or other substrates, characterized in that it comprises, by weight:
(A) from 0.1 to 25 % of at least one salified or quaternized fluoro copolymer according to one of Claims 1 to 5;
(B) from 0.1 to 25 % of at least one aliphatic, araliphatic or aromatic polyisocyanate;
(C) from 0 to 35 % of one or more water-miscible solvents; and
(D) water for dilution in order to make up to 100 %, the proportions of the components being chosen such that the NCO/OH molar ratio is at least equal to 1.2 and such that the content of non-volatile materials in these compositions does not exceed 50 %.

7. Composition according to Claim 6, characterized in that it comprises 1 to 10 % of fluoro copolymer, 0.1 to 10 % of polyisocyanate and 0 to 15 % of water-miscible solvent.

8. Composition according to Claim 6 or 7, characterized in that the fluoro copolymer (A) comprises 70 to 90 % of polyfluoro monomer(s) of formula (I), 2 to 18 % of monomer(s) of formula (II) and 2 to 15 % of monomer(s) of formula (III).

9. Composition according to one of Claims 6 to 8, characterized in that its content of non-volatile materials is less than 20 % and the NCO/OH molar ratio is at least equal to 1.5.

10. Composition according to one of Claims 6 to 9, characterized in that the polyfluoro monomer is a polyfluoroalkyl acrylate of formula: 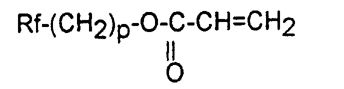 in which Rf has the same meaning as in Claim 1 and p is equal to 2 or 4.

11. Composition according to one of Claims 6 to 10, characterized in that the monomer of formula (II) is dimethylaminoethyl methacrylate or N-tert-butylaminoethyl methacrylate.

12. Composition according to one of Claims 6 to 11, characterized in that the monomer of formula (III) is an alkylene glycol acrylate or methacrylate, preferably 2-hydroxyethyl methacrylate.

13. Composition according to one of Claims 6 to 12, characterized in that the polyisocyanate (B) contains 5 to 25 % by weight of free NCO units.

14. Composition according to one of Claims 6 to 13, characterized in that the solvent (C) is N-methyl-2-pyrrolidone, acetone or a mixture of these compounds.

15. Process for the oleophobic and hydrophobic treatment of building materials or other substrates, characterized in that a composition according to one of Claims 6 to 14 is applied to the surface thereof.

16. Process according to Claim 15, characterized in that 80 g to 800 g of composition are applied per m² of surface to be treated.

17. Process for the oleophobic and hydrophobic treatment of building materials, characterized in that a solution of the fluoro copolymer (A) is first deposited on the material to be treated, followed by an aqueous dispersion of the polyisocyanate (B), or vice versa.

## Patentansprüche

1. Fluoriertes Copolymer in Form eines Salzes oder in quaternisierter Form, enthaltend Aminogruppen, dadurch gekennzeichnet, daß es (berechnet in Gew.-%) besteht aus :
(a) 50 bis 92 % eines oder mehrerer polyfluorierter Monomere der allgemeinen Formel 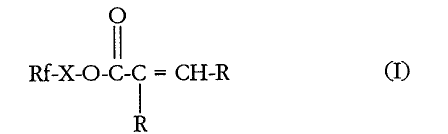 in der Rf einen Perfluoralkylrest mit geradliniger oder verzweigter Kette mit 2 bis 20 Kohlenstoffatomen darstellt; X eine bivalente Kette, die über ein Kohlenstoffatom mit O verbunden ist und einen oder mehrere Sauerstoff-, Schwefel- und/oder Stickstoffatome enthalten kann, darstellt; eines der Symbole R ein Wasserstoffatom und das andere ein Wasserstoffatom oder einen Alkylrest mit 1 bis 4 Kohlenstoffatomen darstellt;
(b) 1 bis 25 % eines oder mehrerer Monomere der allgemeinen Formel 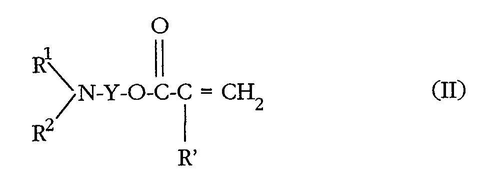 in der Y einen linearen oder verzweigten Alkylenrest mit 1 bis 4 Kohlenstoffatomen darstellt; R' ein Wasserstoffatom oder einen Alkylrest mit 1 bis 4 Kohlenstoffatomen darstellt; R¹ und R², identisch oder verschieden, jeweils ein Wasserstoffatom, einen linearen oder verzweigten Alkylrest mit 1 bis 18 Kohlenstoffatomen oder einen Hydroxyethylrest oder einen Benzylrest darstellen oder R¹ und R² zusammen mit dem Stickstoffatom, mit dem sie verbunden sind, einen Morpholin-, Piperidin- oder Pyrrolidinylrest bilden;
(c) 1 bis 25 % eines oder mehrerer Monomere der allgemeinen Formel 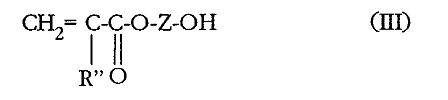 in der R" ein Wasserstoffatom oder einen Alkylrest mit 1 bis 4 Kohlenstoffatomen darstellt und Z einen Alkylenrest mit 2 bis 4 Kohlenstoffatomen darstellt; und
(d) 0 bis 30 % eines oder mehrerer weiterer Monomere, die von den Monomeren der Formeln I, II und III verschieden sind.

2. Fluoriertes Copolymer nach Anspruch 1, dadurch gekennzeichnet, daß es 70 bis 90 % polyfluorierte(s) Monomer(e) der Formel (I), 2 bis 18 % Monomer(e) der Formel (II) und 2 bis 15 % Monomer(e) der Formel (III) enthält.

3. Fluoriertes Copolymer nach Anspruch 1 oder 2, dadurch gekennzeichnet, daß das polyfluorierte Monomer ein Acrylat eines polyfluorierten Alkohols der Formel 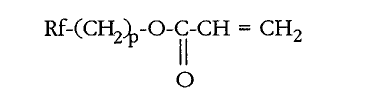 ist, in der Rf dieselbe Bedeutung wie in Anspruch 1 hat und p gleich 2 oder 4 ist.

4. Fluoriertes Copolymer nach einem der Ansprüche 1 bis 3, dadurch gekennzeichnet, daß das Monomer der Formel (II) Dimethylaminoethylmethacrylat oder N-Tertiobutylaminoethylmethacrylat ist.

5. Fluoriertes Copolymer nach einem der Ansprüche 1 bis 4, dadurch gekennzeichnet, daß das Monomer der Formel (III) ein Alkylenglykolacrylat oder -methacrylat, vorzugsweise 2-Hydroxyethylmethacrylat, ist.

6. Zusammensetzung zur oleophoben oder hydrophoben Behandlung von Baumaterialien oder anderen Materialien, dadurch gekennzeichnet, daß sie, berechnet in Gew.-%, umfaßt:
(A) 0,1 bis 25 % mindestens eines versalzten oder quaternisierten fluorierten Copolymers nach einem der Ansprüche 1 bis 5;
(B) 0,1 bis 25 % mindestens eines aliphatischen, arylaliphatischen oder aromatischen Polyisocyanats;
(C) 0 bis 35 % eines oder mehrerer mit Wasser mischbarer Lösemittel; und
(D) Wasser zur Verdünnung zur Vervollständigung auf 100 %, wobei die Mengen der Bestandteile so ausgewählt sind, daß das Molverhältnis NCO/OH mindestens gleich 1,2 beträgt und der Gehalt an nichtflüchtigen Stoffen in diesen Zusammensetzungen 50 % nicht übersteigt.

7. Zusammensetzung nach Anspruch 6, dadurch gekennzeichnet, daß sie 1 bis 10 % fluoriertes Copolymer, 0,1 bis 10 % Polyisocyanat und 0 bis 15 % mit Wasser mischbares Lösemittel umfaßt.

8. Zusammensetzung nach Anspruch 6 oder 7, dadurch gekennzeichnet, daß das fluorierte Copolymer (A) 70 bis 90 % polyfluorierte(s) Monomer(e) der Formel (I), 2 bis 18% Monomer(e) der Formel (II) und 2 bis 15 % Monomer(e) der Formel (III) enthält.

9. Zusammensetzung nach einem der Ansprüche 6 bis 8, dadurch gekennzeichnet, daß ihr Gehalt an nichtflüchtigen Stoffen kleiner als 20 % ist und das Molverhältnis NCO/OH mindestens gleich 1,5 ist.

10. Zusammensetzung nach einem der Ansprüche 6 bis 9, dadurch gekennzeichnet, daß das polyfluorierte Monomer ein Acrylat eines polyfluorierten Alkohols der Formel 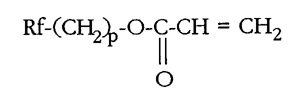 ist, in der Rf dieselbe Bedeutung wie in Anspruch 1 hat und p gleich 2 oder 4 ist.

11. Zusammensetzung nach einem der Ansprüche 6 bis 10, dadurch gekennzeichnet, daß das Monomer der Formel (II) Dimethylaminoethylmethacrylat oder N-Tertiobutylaminoethylmethacrylat ist.

12. Zusammensetzung nach einem der Ansprüche 6 bis 11, dadurch gekennzeichnet, daß das Monomer der Formel (III) ein Alkylenglykolacrylat oder -methacrylat, vorzugsweise 2-Hydroxyethylmethacrylat, ist.

13. Zusammensetzung nach einem der Ansprüche 6 bis 12, dadurch gekennzeichnet, daß das Polyisocyanat (B) 5 bis 25 Gew.-% freie NCO-Einheiten enthält.

14. Zusammensetzung nach einem der Ansprüche 6 bis 13, dadurch gekennzeichnet, daß das Lösemittel (C) N-Methyl-2-pyrrolidon, Aceton oder eine Mischung dieser Verbindungen ist.

15. Verfahren zur oleophoben oder hydrophoben Behandlung von Baumaterialien oder anderen Materialien, dadurch gekennzeichnet, daß man auf ihre Oberfläche eine Zusammensetzung nach einem der Ansprüche 6 bis 14 aufbringt.

16. Verfahren nach Anspruch 15, dadurch gekennzeichnet, daß man 80 g bis 800g der Zusammensetzung pro m² der zu behandelnden Oberfläche anwendet.

17. Verfahren zur oleophoben oder hydrophoben Behandlung von Konstruktionsmaterialien, dadurch gekennzeichnet, daß man zunächst auf dem zu behandelnden Material eine Lösung des fluorierten Copolymers (A) aufbringt, dann eine wäßrige Dispersion des Polyisocyanats (B) oder umgekehrt.
